# EUROPEAN PATENT APPLICATION

(11) **EP 3 236 406 A1**
(43) Date of publication of application: **25.10.2017**
(21) Application number: 15870109.4
(22) Date of filing: 07.01.2015
(51) Int. Cl.: G06Q 30/02, G06Q 50/30

(54) **SYSTEM AND METHOD FOR PROVIDING VIRAL MARKETING SERVICE**

(30) Priority: 19.12.2014 KR 20140184247
(71) Applicant: Ko, Joonseong, Anyang-si, Gyeonggi-do 431-768 (KR)
(72) Inventor: Ko, Joonseong, Anyang-si, Gyeonggi-do 431-768 (KR)
(74) Representative: Becker Kurig Straus
(86) International application number: PCT/KR2015/000135
(87) International publication number: WO 2016/098940

(57) **Abstract**

The present invention relates to so-called word-of-mouth or viral marketing that occurs through the use of a social network service (SNS) or the like in a wired/wireless Internet environment and has the objectives of: replacing existing search advertisement that involves relatively high advertising costs; and resolving the dissatisfaction of users due to dubious and abstract standards of compensating users who have participated in existing word-of-mouth or viral marketing and the dissatisfaction of advertisers whose advertisements are ineffective. To these ends, the present invention provides a system and method for providing a viral marketing service, which are capable of specifically calculating the levels of contribution of users through a service providing server and storing the order of recommendations of users, which forms the basis of advertising fund distribution, in a data schema format to make use of the stored order of recommendations, so as to thereafter raise the level of satisfaction of the users who have participated and also satisfy the advertisers through low advertising costs and an effective and systematic advertising service.

## Description

### [TECHNICAL FIELD]

The present invention relates to a system and method for providing a viral marketing service, and more particularly, to a system and method for providing a viral marketing service by an advertisement module being generated by a service providing server, providing the generated advertisement module to a user terminal over a wired/wireless network, causing a user to make a valid click on a landing page of an advertiser through the advertisement module, and distributing advertising costs to the user according to rumor reliability calculated based on the valid click.

### [BACKGROUND ART]

Along with the recent development of Internet technology over wired/wireless networks, advertisements using Internet media are getting the spotlight from advertisers and users instead of advertisements using voice or video media such as conventional radios or televisions. The advertisements using Internet media can be provided to portable mobile devices as well as personal desktops or notebooks of users. Initial advertisements through Internet media simply showed advertisement pages. However, as systems and programs capable of providing a social network service (SNS) are introduced, viral marketing methods similar to offline methods have become very popular on the basis of such systems and programs.

Viral marketing is a marketing technique that makes Internet users spontaneously promote companies or products through communication media such as emails, messengers, or blogs. Viral marketing is named because it spreads like a computer virus and may be broadly referred to as word-of-mouth marketing.

Viral marketing is different from pre-existing advertisements delivered to consumers in one way in that advertisements are not directly promoted by companies but are delivered by word of mouth of customers. According to viral marketing, Internet users who have viewed products or advertisements of advertisers deliver advertisement content to one another through copying and posting or the like, and thus the products or advertisements naturally become talked about on the Internet. Also, the use of viral marketing has quickly increased in frequency in the current advertisement market because it requires much lower costs than medium advertisements using film such as a pre-existing television show or movie.

Such viral marketing is being further activated in an Internet community through an SNS such as Facebook, Twitter, and KakaoStory or an instant messenger service (IMS) such as KakaoTalk and Line.

Some advertisements using viral marketing may use an incentive approach (a reward or compensation method) in which people are compensated for an action of spreading product information. A conventional compensation system for viral marketing provided through a SNS has a problem in that it is difficult to distribute advertising costs to users on the basis of an accurate compensation criterion because compensation is simply calculated on the basis of data such as the number of clicks or visits of users, and also has another problem in that highly loyal users avoid using the service because it is difficult to distinguish highly loyal users from abusing users.

### [DETAILED DESCRIPTION OF THE INVENTION]

### [TECHNICAL PROBLEM]

In order to solve the above-described problems, the present invention is intended to provide a system and method for providing a viral marketing service, the system and method enabling authenticated users to effectively spread viral information to other users and enabling the other users to perform valid activities in a landing page of an advertiser.

The present invention is also intended to provide a system and method for providing a viral marketing service, the system and method capable of recording an order of recommenders, such as a user who participated in viral marketing and a next-level user, to generate a virtual URL, directly performing viral marketing (or word of mouth) on other users through the generated virtual URL, and providing the viral marketing through a social network service (SNS).

The present invention is also intended to provide a system and method for providing a viral marketing service, the system and method capable of using a relative criterion for distribution of advertising costs in consideration of either reliability of a rumor or reliability, spreadability, and influence of the rumor when users who participate in viral marketing perform valid viral marketing activities in a landing page of an advertiser and then spread rumors about the activities to other users.

### [TECHNICAL SOLUTION]

In order to achieve the above-described objectives, a system for providing a viral marketing service according to the present invention includes an advertisement module generation unit configured to generate an advertisement module, an advertisement module provision unit configured to provide the advertisement module, in which a landing page of an advertiser is included, to a terminal of a 1^{st} user, a user authentication unit configured to authenticate the 1^{st} user, a virtual URL issuing unit configured to issue a virtual URL to the authenticated 1^{st} user, a valid click checking unit configured to check valid clicks from among activities of users (2^{nd} to n^{th} users) to which a rumor is to be spread in the landing page of the advertiser, a storage unit configured to record or store the virtual URL, types of the activities of the users, and data on the activities, a rumor reliability calculation unit configured to calculate rumor reliability of the users by using the types of the activities of the users and the data on the activities, an advertising cost calculation unit configured to calculate an advertising cost distribution proportion through the calculated rumor reliability, and an advertising cost payment unit configured to pay advertising costs to users who trigger the valid clicks according to the advertising cost distribution proportion. Also, a method of providing a viral marketing service according to the present invention includes generating an advertisement module in which a landing page of an advertiser is included and providing the generated advertisement module to a terminal of a 1^{st} user, authenticating the 1^{st} user, issuing a virtual URL to the authenticated 1^{st} user, checking valid clicks from among activities of users (2^{nd} to n^{th} users) to which a rumor is spread in the landing page of the advertiser, recording or storing the virtual URL, types of the activities of the users, and data on the activities in a storage unit, sequentially calculating rumor reliability of the users by using the types of the activities and the data on the activities, calculating an advertising cost distribution proportion through the calculated rumor reliability, and paying advertising costs to users who trigger the valid clicks according to the calculated proportion.

### [ADVANTAGEOUS EFFECTS OF THE INVENTION]

According to an embodiment and a technical spirit of the present invention, since a user who participates in viral marketing receives an advertising cost on a relative and accurate basis according to a marketing participation contribution and an influence thereof in subsequent steps, the user who has received the advertising cost can have high satisfaction in comparison to when other viral marketing is participated in, and thus can actively deliver an advertisement to other users. Also, it is possible to provide an advertiser with a systematic viral marketing service at low cost instead of a pre-existing searching advertisement.

### [DESCRIPTION OF THE DRAWINGS]

FIG. 1 is a configuration diagram showing a system for providing a viral marketing service according to an embodiment of the present invention.
FIG. 2 is a detailed block diagram showing elements of a service providing server according to an embodiment of the present invention.
FIG. 3 is a configuration diagram in which viral marketing advertisement is performed for a 1^{st} user through a service providing server according to an embodiment of the present invention.
FIG. 4 is a configuration diagram in which viral marketing advertisement is performed for a 2^{nd} user through a service providing server according to an embodiment of the present invention.
FIG. 5 is a flowchart sequentially showing a method of providing a viral marketing service according to an embodiment of the present invention.
FIG. 6 is an implementation diagram showing an initial screen on which an advertisement list or an advertisement campaign list, which are provided to a user terminal through a server for providing viral marketing, is displayed according to an actual embodiment of the present invention.
FIG. 7 is an implementation diagram showing a screen of a user terminal that displays an advertisement module including a landing page of an advertiser through a service providing server according to an actual embodiment of the present invention.
FIG. 8 is an implementation diagram showing a screen of a user terminal that is changed when a start rumor button is clicked according to an embodiment of the present invention.

### [BEST MODE OR MODE OF THE INVENTION]

Hereinafter, example embodiments will be described in detail with reference to the accompanying drawings so that they can be easily practiced by those skilled in the art to which the present invention pertains. However, the accompanying drawings are described to facilitate understanding of the present invention, and the present invention may be embodied in many different forms and is not limited to the embodiments set forth herein. Accordingly, the scope of the present invention is not to be construed as being limited to these embodiments.

In the accompanying drawings, portions irrelevant to the description of the present invention will be omitted for clarity. Moreover, like reference numerals refer to like elements throughout.

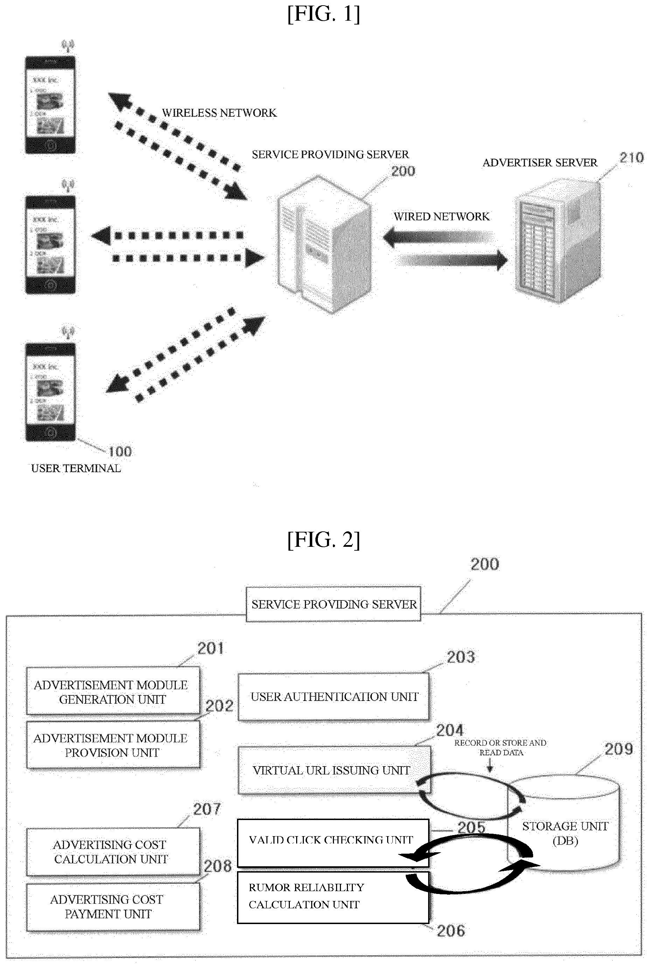

FIG. 1 is a configuration diagram showing an overall configuration of a system for providing a viral marketing service according to an embodiment of the present invention, and FIG. 2 is a block diagram showing a detailed structure of a service providing server shown in FIG. 1.

Referring to FIG. 1, a system for providing a viral marketing service according to an embodiment of the present invention largely includes a user terminal 100, a service providing server 200, and an advertiser server 210, which are connected to each other over a wired or wireless network and configured to transmit or receive various kinds of signals or data in a wired or wireless manner.

The user terminal 100 is shown as a wireless terminal or a cell phone in the drawings, but is not limited thereto. The user terminal 100 may be any kind of computer or mobile device that is used by a user, and may be any hardware device capable of inputting, searching for, and displaying information through wired/wireless communication. Also, software that drives a device is installed by default, and it is possible to access the service providing server 200 by using such a terminal.

Recently, smartphones are widely used as wireless terminals or cell phones. Accordingly, it is preferable that the user terminal 100 for implementing a function to be described below be a smartphone in which an appropriate application or program is installed.

Next, the service providing server 200 serves to connect the advertiser server 210 and the user terminal 100, receive a member registration in order for an advertiser and a user to provide and consume advertisements, and provide a landing page 701 for an advertisement provided by the advertiser to the user terminal 100 together with an advertisement module.

As shown in FIG. 2, the service providing server 200 may be composed of an advertisement module generation unit 201, an advertisement module provision unit 202, a user authentication unit 203, a virtual URL issuing unit 204, a valid click checking unit 205, a rumor reliability calculation unit 206, an advertising cost calculation unit 207, an advertising cost payment unit 208, and a storage unit 209.

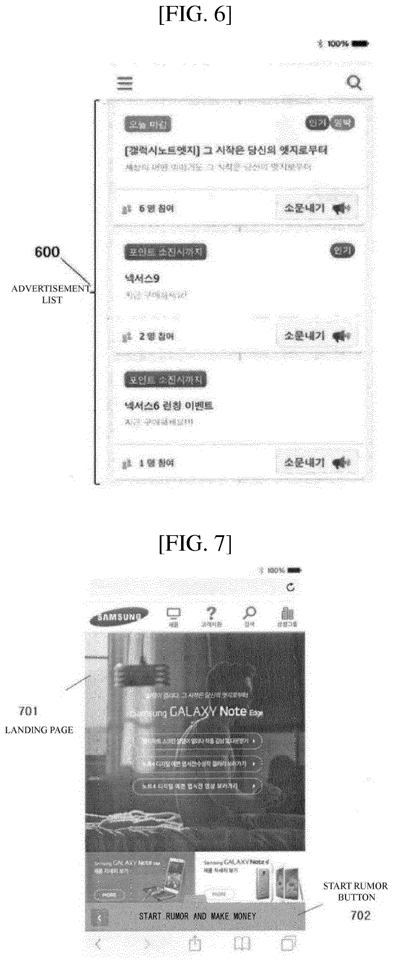

The advertisement module generation unit 201 and the advertisement module provision unit 202 may generate an advertisement module and provide the advertisement module to the user terminal 100 as an entire page or place the advertisement module at a portion of the user terminal 100 as shown in FIG. 7. The advertisement module may be provided in the form of a polygonal or circular button, a bar, or a layer surrounding the landing page 701 of the advertiser.

Here, the advertisement module may include a function needed to provide a viral marketing service of the present invention as well as a landing page desired to be advertised.

The advertisement module generated by the advertisement module generation unit 201 includes the landing page 701 of the advertiser and performs a start rumor function through a start rumor button 702. Here, the start rumor function performs viral marketing in the form of word of mouth and refers to a function that can be used by clicking the start rumor button 702 in the landing page of the advertiser or through a separate menu.

The start rumor function allows an advertisement to be spread to friends of a user in the form of word of mouth in linkage with a social network service (SNS) or an instant messenger service (IMS) or by using a virtual URL, which will be described below.

As described above, the advertisement module may be provided at a portion of the screen of the user terminal in the form of a separate clickable button, bar, or layer surrounding the landing page of the advertiser as well as to the landing page 701 of the advertiser, and may also be embedded and provided with a size or form that cannot be manipulated by a user on the screen of the user terminal 100.

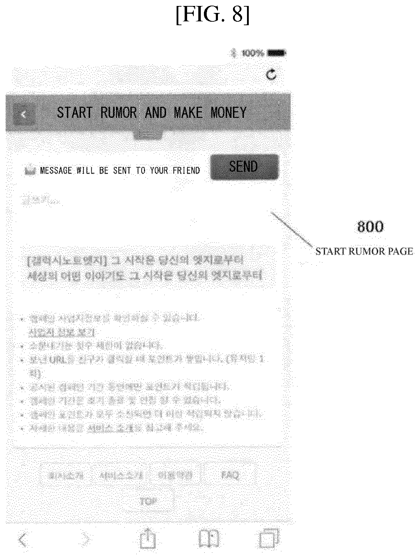

Also, the advertisement module is switched to a start rumor page 800 and displayed on the user terminal 100 as shown in FIG. 8 when the advertisement module is clicked by a user, and the advertisement module may be switched back to a screen including the landing page of the advertiser as shown in FIG. 7 when the advertisement module is clicked again.

The start rumor function included in the advertisement module may be used through a clickable button 702 or a menu provided by the advertisement module. The function may be performed in linkage with an SNS or an IMS or through a virtual URL.

Also, the user authentication unit 203 may authenticate a user who wants to perform viral marketing through the advertisement module, and may check a valid activity of a user who participates in viral marketing by authenticating the user. Accordingly, checked data may be used as one piece of reference data for distribution of advertising costs.

Also, the authentication of a user may be performed through two methods. A first method is capable of performing the authentication through a member login after a service providing company is joined as a member, and a second method is capable of authenticating a user who is not a member through a cell phone authentication.

As described above, an element such as a virtual URL is used in the viral marketing service provided by the present invention, and the virtual URL has a structure including three pieces of data such as "arbitrary address value," "actual URL," and "user information."

The "arbitrary address value" is generated when the virtual URL is issued. When the virtual URL is generated as "http://Qping.kr/q/Oy34apP," "Oy34apP," which is composed of letters and numbers of the last part of the virtual URL, corresponds to any address value. Also, the "actual URL" corresponds to an actual home page address of the landing page 701 of the advertiser. For example, an actual product homepage address for the Samsung Electronics GALAXY S5 is "http://www.samsung.com/sec/galaxys5," a URL link of this address is the "actual URL." Last, the "user information" is various kinds of personal information data of a user who is authenticated using one of the above-described two user authentication methods.

Since an "actual URL" having a long length, such as the address of the GALAXY S5, is not practically suitable to be used in an SNS or a messenger, a virtual URL that includes all data, is short, and is also needed in a viral marketing service is proposed and used. The virtual URL is called a short URL due to a short length, and a tiny URL can be used as the virtual URL.

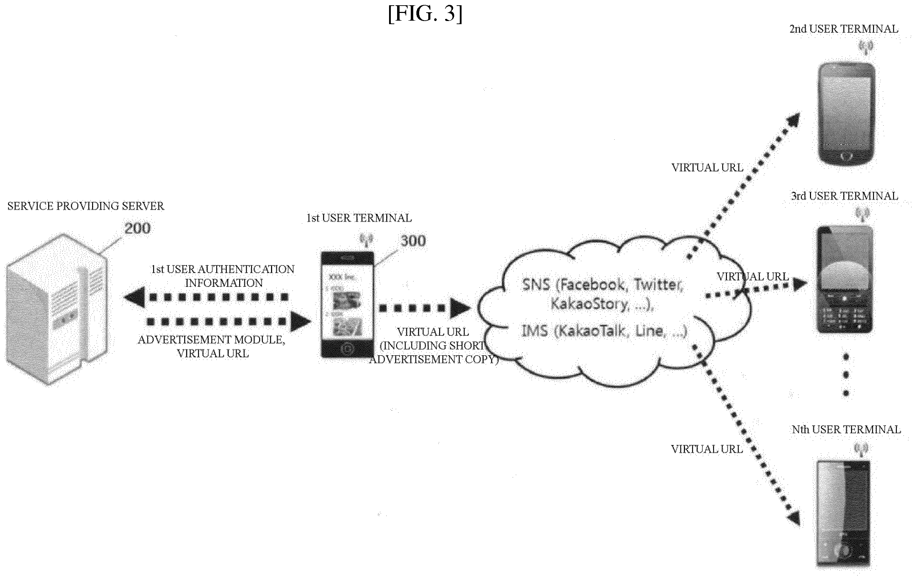

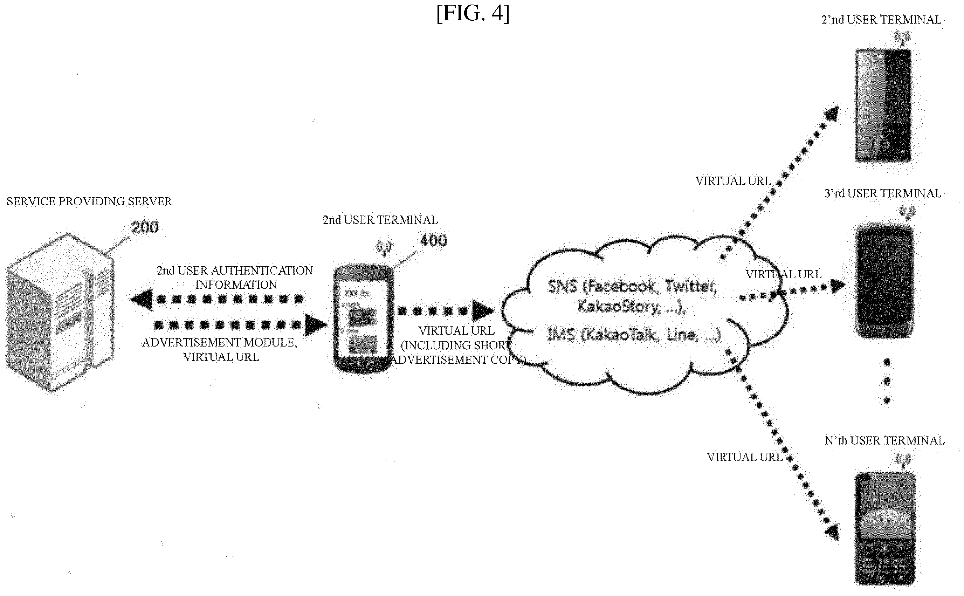

Such a virtual URL is issued by a user authenticated by the virtual URL issuing unit 204. When 1^{st} and 2^{nd} users authenticated as shown in FIGS. 3 and 4 receive the virtual URL through the start rumor function, information of the 1^{st} user who previously received a recommendation is not included in a virtual URL received by the 2^{nd} user who receives a recommendation. As the number of users who receive recommendations increases, such a format has a layered structure and a data schema form in which information of users who previously received recommendations is sequentially stored in the "user information" and included in the virtual URL of the user who receives the recommendation.

As described above, the virtual URL issuing unit 204 has three kinds of data of the virtual URL. When the virtual URL is issued to a corresponding user, the virtual URL is recorded or stored in the storage unit 209 including a database. The stored virtual URL may be used when a layered structure between users is checked later in an advertising cost distribution step and a higher distribution proportion is allocated to a higher-priority user such as the 1^{st} user.

The storage unit 209 including the database mainly has a storage space in the service providing server 200, but may have a storage module or unit outside the server.

Generally, in viral marketing, the 1^{st} user serves to spread an advertisement through a rumor, and 2^{nd} to n^{th} users (n is a number greater than 2) who receive the advertisement start an activity desired by an advertiser.

In this case, as shown in FIG. 3, first, the 1^{st} user is a user who receives a virtual URL from the service providing server 200 and may spread a rumor about the virtual URL through various kinds of SNSs or messengers (IMSs) as well as a short advertisement copy when necessary. Users who received the rumor from the 1^{st} user are the 2^{nd} to n^{th} users.

When any one of the 2^{nd} to n^{th} users clicks a virtual URL sent by the 1^{st} user, the virtual URL provides an advertisement module generated through the advertisement module generation unit 201 to the user who clicked the virtual URL through the advertisement module provision unit 202, and the user who clicked the virtual URL sent by the 1^{st} user starts several activities in the landing page 701 provided by the advertisement module from the advertiser.

The activities include various activities such as an action of clicking the virtual URL to open the landing page 701 of the advertiser, an action of merely staying on the landing page 701, an action of viewing a product or an advertisement copy on the landing page 701, an action of joining the landing page 701, and an action of purchasing a product on the landing page 701. When the advertiser is an app associated company, an activity of downloading an app may also be included.

The valid click checking unit 205 examines the activities, extracts the total number of clicks during activities of the 2^{nd} to n^{th} users, and extracts, as the number of valid clicks, the number of clicks that are thought to be valid among the total number of clicks extracted by the advertiser.

The total number of clicks refers to the sum of the numbers of clicks of the 2^{nd} to n^{th} users who clicked the virtual URL sent by the 1^{st} user to open the landing page 701 of the advertiser, and the number of valid clicks is determined by determining whether the 2^{nd} to n^{th} users stay on the landing page 701 of the advertiser during the activities of the 2^{nd} to n^{th} users in a certain time range and whether the 2^{nd} to n^{th} users performed activities (the above-described product purchase, advertiser landing page member registration, app download, etc.) desired by the advertiser on the landing page 701.

The total number of clicks and the number of valid clicks that are determined in such a way are recorded or stored in the storage unit (i.e., a DB) 209 and then used to calculate reliability.

The 1^{st} user who first starts the rumor delivers the virtual URL issued from the service providing server 200 to the 2^{nd} to n^{th} users to trigger clicks of the 2^{nd} to n^{th} users, extracts the number of valid activities, which are pre-defined, among the triggered clicks through the valid click checking unit 205, and calculates a rumor reliability of the 1^{st} user.

The rumor reliability of the 1^{st} user is obtained by spreading the virtual URL received by the 1^{st} user to users at a subsequent stage (e.g., the 2^{nd} to n^{th} users) through viral marketing or word of mouth and calculating a degree to which the spread word of mouth brings a valid advertisement-associated result for the users at the subsequent stage, and refers to an index or a numerical value for the 1^{st} user, who is the rumor spreader, to check a degree of reliability of the viral marketing or word of mouth while the viral marketing is underway.

The rumor reliability may be calculated and extracted by the rumor reliability calculation unit 206. In this case, the rumor reliability is calculated by using the total number of clicks and the number of valid clicks that are prestored in the storage unit 209. In the case in which the rumor reliability is calculated as shown in FIGS. 3 and 4, for example, when the 2^{nd} to n^{th} users carry out valid activities whenever opening the landing page 701 through the 1^{st} user, who is a first rumor spreader, the rumor reliability of the 1^{st} user that triggers the valid activities is "1." However, when 2'^{nd} to n'^{th} users open the landing page 701 a total of ten times and five activities are valid through the 2^{nd} user, who is another first rumor spreader, this indicates a rumor reliability of "0.5." Thus, it may be interpreted that the rumor reliability spread by the 2^{nd} user is only half that of the 1^{st} user in comparison to the 1^{st} user having the rumor reliability of "1."

Accordingly, referring to the above-described example, it is preferable that the rumor reliability be defined as "(reliability of rumor) = (number of valid clicks) / (total number of clicks)."

The rumor reliability may be calculated and extracted for each of the users forming a layered structure while the viral marketing is underway. The rumor reliability for each user may be a criterion for classifying the users according to reliability levels. Also, a weight is assigned to each of the reliability levels of the users. In this case, the advertising cost calculation unit 207 calculates advertising costs distributed to the users in consideration of the rumor reliability for each of the users and also the weight for each of the reliability levels.

For example, by assigning a high weight to a user with a high reliability when comparing a user with the rumor reliability of "1" and a user with the rumor reliability of "0.5," a high advertising cost is allocated to the user with high rumor reliability even when the advertising costs are finally distributed.

The distributed advertising costs are allocated to the users by the advertising cost payment unit 208.

Also, other than the rumor reliability, a "rumor spreadability" index and a "rumor influence" index may be calculated and used through a spreadability calculation unit and an influence calculation unit. "Rumor spreadability" is an index for checking a degree to which a rumor started by a user has spread by extracting the number of rumors started by users who participate in the viral marketing and dividing the extracted number of rumors by the total number of clicks of the 2^{nd} to n^{th} users.

For example, when the 1^{st} user starts a rumor ten times through several SNSs or messengers and the 2^{nd} to n^{th} users who received the rumor from the 1^{st} user click a total of twenty times, the rumor started by the 1^{st} user may have a spreadability of "2." This means that a total of twenty clicks are triggered by spreading the rumor ten times.

Next, when the 2^{nd} user spreads the rumor twenty times through the SNS or messenger, but the total number of clicks of the 2'^{nd} to n'th users who receive the rumor from the 2^{nd} user is twenty like that described above, the spreadability of the rumor started by the 2^{nd} user is "1." It can be seen that the 2^{nd} user has a lower actual click triggering degree than the 1^{st} user although the 2^{nd} user spreads the rumor more frequently than the 1^{st} user. That is, it can be seen that the 2^{nd} user has lower contribution than the 1^{st} user in terms of rumor spreadability.

Similar to the above-described rumor reliability, the rumor spreadability of the user may be defined as "(rumor spreadability) = (total number of clicks) / (number of times user starts rumor)."

Here, when both the "rumor reliability" and the "rumor spreadability" are high, an influence on the rumor of the user who spread the rumor is naturally high. The "rumor influence" may be calculated by multiplying the "rumor reliability" by the "rumor spreadability."

Considering the rumor reliability and rumor spreadability of the 1^{st} and 2^{nd} users in the above-described example, the rumor reliability and rumor spreadability of the 1^{st} user is "1" and "2," respectively. Thus, it can be seen that the rumor influence of the 1^{st} user is 2 (=1 x 2) through "(rumor influence) = (rumor reliability) x (rumor spreadability)." On the other hand, the rumor influence of the 2^{nd} user is 0.5 (= 0.5 x 1). Thus, it can be seen through the calculation that the 2^{nd} user is a user having a rumor influence approximately equal to 1/4 the rumor influence of the 1^{st} user in the viral marketing.

As a reference, when the equation of rumor influence is obtained using the equation of rumor reliability and the equation of rumor spreadability, the equation of rumor influence can be seen as (rumor influence) = (rumor reliability) x (rumor spreadability) = {(number of valid clicks) / (total number of clicks)} x {(total number of clicks) / (number of times user spreads rumor)} = (number of valid clicks) / (number of times user spreads rumor). This equation shows that the valid numbers of clicks of users at the subsequent stage who received the rumor relative to the number of times the user spreads the rumor is equal to the influence to the rumor of the user who has spread the rumor. That is, it can be seen that the definition is mathematically or semantically accurate.

The calculated rumor influence may be extracted for each user like the above-described rumor reliability and written as a list. When a request is made by the advertiser, the list can be read from the service providing server 200 according to the request of the advertiser.

Also, the "rumor spreadability" and the "rumor influence," as well as to the "rumor reliability," may be considered when calculating advertising costs. The advertising costs may be distributed and paid to the users by the advertising cost payment unit 208 in consideration of the three indices.

Next, a method in which viral marketing advertisement is performed for a 1^{st} user will be described in detail with reference to FIG. 3.

Referring to FIG. 3, one of the user terminals 100 shown in FIG. 1 is defined as a 1^{st} user terminal 300, and an advertisement module including the landing page 701 of the advertiser as shown in FIG. 7 is received from the service providing server 200. Subsequently, the 1^{st} user terminal 300 becomes an initial rumor spreader by receiving a virtual URL through a 1^{st} user authentication while spreading a rumor.

The received virtual URL is delivered to 2^{nd} to n^{th} user terminals through an SNS or a messenger service that is accessible by the 1^{st} user terminal 300, and the delivered virtual URL is clicked to allow the 2^{nd} to n^{th} user terminals to receive the advertisement module from the service providing server 200.

Referring to FIG. 4, when the virtual URL is delivered from the 1^{st} user terminal 300, a 2^{nd} user terminal 400 receives the same advertisement module as the advertisement module provided by the 1^{st} user terminal 300 from the service providing server 200 by the virtual URL being clicked. After a 2^{nd} user authentication is performed like the 1^{st} user authentication, the 2^{nd} user terminal 400 receives a virtual URL for the 2^{nd} user stored in a layered structure and becomes a new initial rumor spreader to start a rumor. When a user after the 1^{st} user becomes a new initial rumor spreader, a position of the above-described 1^{st} user is newly set, and thus the embodiment of the present invention may be applied without modification.

A history of the layered structure is stored in the aforementioned storage unit 209 in a data schema form of a virtual URL, and all records of previous rumor spreaders are stored in a virtual URL received by the final n^{th} user. The layered structure may be read and used when the advertising costs are calculated.

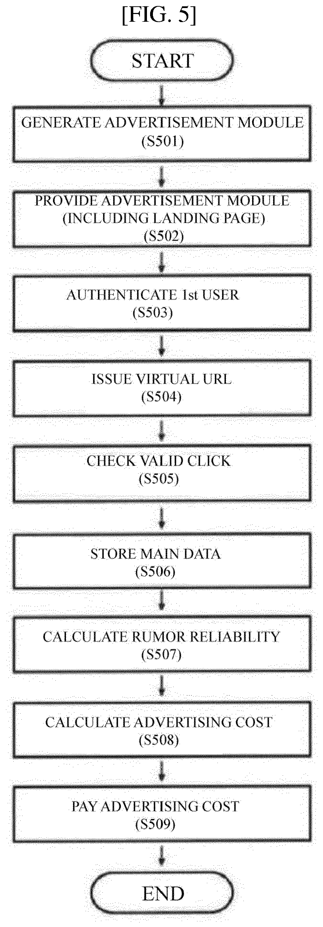

FIG. 5 is a flowchart showing a method of providing a viral marketing service through the above-described service providing server 200. As shown, an advertisement module is generated by the service providing server 200 (S501). The advertisement module is provided to the 1^{st} user terminal 100, which is an initial rumor spreader (S502). In this case, a 1^{st} user to start a rumor is authenticated (S503).

A virtual URL for the authenticated 1^{st} user is issued (S504), and then the virtual URL is delivered to 2^{nd} to n^{th} users to which a rumor is spread by the 1^{st} user to trigger clicks of the 2^{nd} to n^{th} users. Also, the virtual URL, which includes user layer information, is stored in the storage unit 209.

The number of valid clicks defined as valid activities among the clicks of the 2^{nd} to n^{th} users is checked (S505), and main data such as the above-described total number of clicks and number of valid clicks is stored in the storage unit 209 (S506).

The above-described virtual URL or data such as the total number of clicks and the number of valid clicks is recorded or stored in the storage unit 209 when data is generated, and then read and used when necessary. Accordingly, even when the flowchart does not include a corresponding step, data that needs to be stored may be considered as being immediately stored in the storage unit 209 when generated and as being used later.

Rumor reliability is calculated for each user by using the stored main data (S507). Subsequently, reliability levels of the users are classified according to the rumor reliability, and level weights are assigned to the reliability levels. Advertising costs to be allocated to the users are calculated in consideration of the rumor reliability and the level weights (S508).

Subsequently, the advertising costs are paid to the users according to a calculated advertising cost distribution proportion (S509).

The method of providing a viral marketing service through the service providing server 200 can be carried out by the service providing server 200 through a unit for each step as shown in FIG. 2. Also, the service providing server 200 may perform and carry out all functions of the units.

FIGS. 6 to 8 are diagrams showing operation of an embodiment that is provided to the actual user terminal 100 through the service providing server 200 of the present invention.

FIG. 6 shows a list, which is also referred to as an advertisement list 600 or an advertisement campaign list, displayed on the user terminal 100 through a viral marketing providing server. When accessing a homepage of a company which provides a viral marketing service or directly accessing a viral marketing homepage, a user participating in viral marketing receives the advertisement list 600, through which landing pages of advertisers are accessed, as shown in FIG. 6.

A user who participates in the viral marketing through the advertisement list 600 receives an advertisement module including the landing page 701 of an advertiser and a start rumor function as shown in FIG. 7 from the service providing server 200 through the user terminal 100. When the start rumor button 702 is clicked to perform the start rumor function, the advertisement module is switched to the start rumor page 800 for performing the start rumor function as shown in FIG. 8.

A simple introduction message to be sent to 2^{nd} to n^{th} users may be written through the switched to start rumor page 800, and a virtual URL is issued to an authenticated user, who is an initial spreader.

In the following description, as described above, the initial spreader selects an SNS or messenger used to spread a rumor, and the 2^{nd} to n^{th} users who received the virtual URL determine whether to spread the rumor or start a valid activity on the landing page 701. The number of valid clicks is extracted from the valid activity. An advertisement distribution proportion is calculated for each user. Then, advertising costs are paid to the users according to the advertisement distribution proportion.

According to the present invention, a touch input for selecting the advertisement list or an input for clicking a button for a start rumor function, selecting an SNS or messenger, and clicking a button for spreading a virtual URL corresponds to an initial input or an intermediate input for passing data to a subsequent step. The touch input or the button click input corresponds to a mechanical input action irrelevant to a decision of a user.

The method of providing a viral marketing service according to an embodiment of the present invention can be implemented in the form of computer-readable program instructions and stored in a computer-readable recording medium. The computer-readable recording medium includes any type of recording device in which data readable by a computer system is stored. The program instructions recorded or stored in the storage medium may be designed and configured specifically for the present invention, or can be publicly known and available to those skilled in the field of software. The computer-readable recording medium can also be distributed over network-coupled computer systems, and computer-readable codes may be stored and executed in a distributed manner. Examples of the program instructions include not only machine codes made by a compiler but also high-level language codes executable by a device for electronically processing information using an interpreter, for example, a computer.

The above exemplary hardware device may be configured to operate as one or more software modules in order to perform the operation of the present invention, and vice versa.

While the present invention has been described with reference to the preferred embodiments, it should be understood by those skilled in the art that various modifications and changes may be made herein without departing from the spirit and scope of the invention as defined by the appended claims. The above embodiments are to be accordingly regarded as illustrative rather than restrictive.

Therefore, all changes or modifications within the appended claims and their equivalents should be construed as being included in the scope of the invention.

## Claims

1. A system for providing a viral marketing service, the system comprising:
a wired or wireless network configured to transmit or receive data;
a user terminal of a user who participates in viral marketing;
an advertiser server configured to provide a landing page of an advertiser; and
a service providing server configured to provide a viral marketing service over the wired or wireless network, wherein
the service providing server comprises an advertisement module generation unit configured to generate an advertisement module, an advertisement module provision unit configured to provide the advertisement module, in which the landing page of the advertiser is included, to a terminal of a 1^{st} user, a user authentication unit configured to authenticate the 1^{st} user, a virtual URL issuing unit configured to issue a virtual URL to the authenticated 1^{st} user, a valid click checking unit configured to check valid clicks from among activities of users (2^{nd} to n^{th} users) to which a rumor is to be spread in the landing page of the advertiser, a storage unit configured to record or store the virtual URL, types of the activities of the users, and data on the activities, a rumor reliability calculation unit configured to calculate rumor reliability of the users by using the types of the activities of the users and the data on the activities, an advertising cost calculation unit configured to calculate an advertising cost distribution proportion through the calculated rumor reliability, and an advertising cost payment unit configured to pay advertising costs to users who trigger the valid clicks according to the advertising cost distribution proportion.

2. The system of claim 1, wherein the advertisement module is provided to the user terminal as a separate page or placed at a portion of a screen of the user terminal, and has the form of a polygonal or circular button, a bar, or a layer surrounding the landing page of the advertiser.

3. The system of claim 2, wherein the advertisement module has a size or form that is adjustable by a user through a click or touch or a size or form that is not adjustable by the user.

4. The system of claim 2, wherein the advertisement module is maintained in the form of a button or a bar and switched to a start rumor page and reversely switched when clicked.

5. The system of claim 2, wherein the advertisement module includes a start rumor function associated with viral marketing in the form of word of mouth.

6. The system of claim 5, wherein the start rumor function is available through a separate button or menu of the advertisement module, and the start rumor function is performed in linkage with a social network service (SNS) or an instant messenger service (IMS) or performed through the virtual URL.

7. The system of claim 1, wherein the user authentication unit performs the authentication through a member login or through a non-member login using cell phone authentication.

8. The system of claim 1, wherein the virtual URL includes a short URL or a tiny URL.

9. The system of claim 8, wherein the virtual URL is stored in the storage unit after being issued and includes an address of the landing page of the advertiser and also layered structure information corresponding to recommendations of the users.

10. The system of claim 1, wherein the storage unit includes a database, and the database is placed inside or outside the service providing server.

11. The system of claim 5, wherein the activities of the 2^{nd} to n^{th} users include an action of opening a landing page of an advertiser that is recommended by a rumor started by the 1^{st} user, an action of staying on the landing page of the advertiser for a certain time while viewing products, an action of joining the landing page, an action of purchasing a product, and an action of downloading an app.

12. The system of claim 11, wherein the valid click checking unit checks the total number of clicks during the activities of the 2^{nd} to n^{th} users and extracts the number of valid clicks from the total number of clicks.

13. The system of claim 12, wherein the total number of clicks is a sum of the numbers of clicks which are triggered by the 1^{st} user and through which the 2^{nd} to n^{th} users open the landing page of the advertiser, and the number of valid clicks is the number of clicks that are determined as valid activities of the 2^{nd} to n^{th} users among the total number of clicks.

14. The system of claim 13, wherein whether a click is valid is determined by determining whether the click corresponds to any one of (i) a time for which the 2^{nd} to n^{th} users stay on the landing page of the advertiser in a certain time range and (ii) an occurrence of an activity (a product purchase, an advertiser landing page member registration, and an app download) desired by the advertiser..

15. The system of claim 12, wherein the total number of clicks and the number of valid clicks are recorded or stored in the storage unit.

16. The system of claim 15, wherein the rumor reliability calculation unit reads the total number of clicks and the number of valid clicks from the storage unit to find the rumor reliability.

17. The system of claim 16, wherein the rumor reliability is found by dividing the number of valid clicks by the total number of clicks.

18. The system of claim 17, wherein reliability levels of the users are assigned as the rumor reliability.

19. The system of claim 18, wherein the advertising cost calculation unit assigns a weight depending on the reliability levels and calculates an advertising cost to be paid to the 1^{st} user, who triggers a valid click, in consideration of the assigned weight and also the rumor reliability.

20. The system of claim 17, further comprising a spreadability calculation unit configured to extract the number of times the 1^{st} user spreads the rumor with respect to the start rumor function and calculate a rumor spreadability.

21. The system of claim 20, wherein the rumor spreadability is found by dividing the total number of clicks by the number of times the 1^{st} user spreads the rumor.

22. The system of claim 21, further comprising an influence calculation unit configured to calculate a rumor influence to a corresponding user by using the rumor reliability and the rumor spreadability.

23. The system of claim 22, wherein the rumor influence is found by multiplying the rumor reliability by the rumor spreadability.

24. The system of claim 23, wherein the rumor influence is calculated for each of the users and written as a list, and the list is read from the service providing server according to a request from the advertiser.

25. The system of claim 19 or 23, wherein the advertising cost payment unit pays the advertising cost calculated by the advertising cost calculation unit to the user or calculates an advertising cost in consideration of the rumor spreadability and the rumor influence and then pays the advertising cost to the user.

26. A method of providing a viral marketing service, which is performed by a service providing server, the method comprising:
generating an advertisement module in which a landing page of an advertiser is included and providing the generated advertisement module to a terminal of a 1^{st} user;
authenticating the 1^{st} user;
issuing a virtual URL to the authenticated 1^{st} user;
checking valid clicks from among activities of users (2^{nd} to n^{th} users) to which a rumor is to be spread in the landing page of the advertiser;
recording or storing the virtual URL, types of the activities of the users, and data on the activities in a storage unit;
calculating rumor reliability of the users by using the types of the activities of the users and the data on the activities;
calculating an advertising cost distribution proportion through the calculated rumor reliability; and
paying advertising costs to users who trigger the valid clicks according to the calculated proportion.

27. The method of claim 26, wherein the advertisement module is provided to the user terminal as a separate page or placed at a portion of a screen of the user terminal, and has the form of a polygonal or circular button, a bar, or a layer surrounding the landing page of the advertiser.

28. The method of claim 27, wherein the advertisement module has a size or form that is adjustable by a user through a click or touch or a size or form that is not adjustable by the user.

29. The method of claim 27, wherein the advertisement module is maintained in the form of a button or a bar and switched to a start rumor page and reversely switched when clicked.

30. The method of claim 27, wherein the advertisement module includes a start rumor function associated with viral marketing in the form of word of mouth.

31. The method of claim 30, wherein the start rumor function is available through a separate button or menu of the advertisement module, and the start rumor function is performed in linkage with a social network service (SNS) or an instant messenger service (IMS) or performed through the virtual URL.

32. The method of claim 26, wherein the authentication is performed through a member login or through a non-member login using cell phone authentication.

33. The method of claim 26, wherein the virtual URL includes a short URL or a tiny URL.

34. The method of claim 33, wherein the virtual URL is stored after being issued and includes an address of the landing page of the advertiser and also layered structure information corresponding to recommendations of the users.

35. The method of claim 26, wherein the virtual URL, the types of the activities of the users, and the data on the activities are recorded or stored in the storage unit, such as a database, and the storage unit is placed inside or outside the service providing server.

36. The method of claim 30, wherein the activities of the users include an action of opening a landing page of an advertiser that is recommended by a rumor started by the 1^{st} user, an action of joining the landing page, an action of purchasing a product, and an action of downloading an app.

37. The method of claim 36, wherein the total number of clicks is checked during the activities of the users, and the number of valid clicks is extracted from the total number of clicks.

38. The method of claim 37, wherein the total number of clicks is a sum of the numbers of clicks which are triggered by the 1^{st} user and through which the users open the landing page of the advertiser, and the number of valid clicks is the number of clicks that are determined as valid activities of the users among the total number of clicks.

39. The method of claim 38, wherein whether a click is valid is determined by determining whether the click corresponds to any one of (i) a time for which the users stay on the landing page of the advertiser in a certain time range and (ii) an occurrence of an activity (a product purchase, an advertiser landing page member registration, and an app download) desired by the advertiser.

40. The method of claim 37, wherein the total number of clicks and the number of valid clicks are recorded or stored in the storage unit.

41. The method of claim 40, wherein the total number of clicks and the number of valid clicks are read from the storage unit to find the rumor reliability.

42. The method of claim 41, wherein the rumor reliability is found by dividing the number of valid clicks by the total number of clicks.

43. The method of claim 42, wherein reliability levels of the users are assigned as the rumor reliability.

44. The method of claim 43, wherein a weight is assigned depending on the reliability levels, and an advertising cost to be paid to the 1^{st} user, who triggers a valid click, is calculated in consideration of the assigned weight and also the rumor reliability.

45. The method of claim 42, further comprising extracting the number of times the 1^{st} user spreads the rumor with respect to the start rumor function and calculating a rumor spreadability.

46. The method of claim 45, wherein the rumor spreadability is found by dividing the total number of clicks by the number of times the 1^{st} user spreads the rumor.

47. The method of claim 46, further comprising calculating a rumor influence to a corresponding user by using the rumor reliability and the rumor spreadability.

48. The method of claim 47, wherein the rumor influence is found by multiplying the rumor reliability by the rumor spreadability.

49. The method of claim 48, wherein the rumor influence is calculated for each of the users and written as a list, and the list is read from the service providing server according to a request from the advertiser.

50. The method of claim 44 or 48, wherein the calculated advertising cost is paid to the user or an advertising cost calculated in consideration of the rumor spreadability and the rumor influence is paid to the user.
